# EUROPÄISCHE PATENTSCHRIFT

(11) **EP 1 723 746 B1**
(45) Veröffentlichungstag und Bekanntmachung des Hinweises auf die Patenterteilung: **15.08.2007**
(21) Anmeldenummer: 05714968.4
(22) Anmeldetag: 14.02.2005
(51) Int. Cl.: H04L 12/28, H04Q 7/38, H04M 1/253

(54) **Datenfluss-Steuerung von WLAN-Funkverbindungen zur Beeinträchtigung der Internet-Telefonie**
Data flow control in WLAN radio connections for the impairment of internet telephony
Commande du flux de données de liaisons radio de réseau local sans fil visant à désavantager la téléphonie par internet

(30) Priorität: 11.03.2004 DE 102004012036
(43) Veröffentlichungstag der Anmeldung: 22.11.2006
(73) Patentinhaber: Infineon Technologies AG, 81669 München (DE)
(72) Erfinder: RÜCKRIEM, Reinhard, 81669 München (DE)
(74) Vertreter: Patentanwälte Lambsdorff & Lange
(86) Internationale Anmeldenummer: PCT/DE2005/000249
(87) Internationale Veröffentlichungsnummer: WO 2005/088907

(56) Entgegenhaltungen:
- WO-A-03/043267
- JEONGGYUN YU ET AL: "Enhancement of VoIP over IEEE 802.11 WLAN via dual queue strategy" COMMUNICATIONS, 2004 IEEE INTERNATIONAL CONFERENCE ON PARIS, FRANCE 20-24 JUNE 2004, PISCATAWAY, NJ, USA,IEEE, Bd. 6, 20. Juni 2004 (2004-06-20), Seiten 3706-3711, XP010709832 ISBN: 0-7803-8533-0
- "Series G: Transmission systems and media, digital systems and networks. International telephone connections and circuits - General Recommendations on the transmission quality for an entire telephone connection."[Online] Mai 2003 (2003-05), Seiten 1-13, XP002332670 GENEVA Gefunden im Internet: URL:http://mirror.itu.int/dms/pay/itu-t/re c/g/T-REC-G.114-200305-I!!PDF-E.pdf> [gefunden am 2005-06-20]

## Beschreibung

Die Erfindung betrifft ein Verfahren und eine Vorrichtung zur Steuerung des Datenflusses von WLAN-Funkverbindungen nach den unabhängigen Patentansprüchen.

Die mobile Sprachkommunikation wird hauptsächlich über zellenbasierte Mobilfunk-Netze abgewickelt. In Europa basieren derartige zellenbasierte Mobilfunk-Netze auf dem GSM-Standard oder dem UMTS-Standard. Die Nutzung dieser Mobilfunk-Netze ist für den Nutzer kostenpflichtig, wobei Gebühren entsprechend der Gesprächsdauer anfallen.

Hauptanwendungsgebiet drahtloser lokaler Netzwerke, auch WLANs (Wireless Local Area Network) genannt, ist im Gegensatz dazu die nicht-sprachorientierte Datenübertragung. WLAN bildet dabei einen Oberbegriff für eine Vielzahl verschiedener Standards für lokale drahtlose Netzwerke. Dazu zählen insbesondere die verschiedenen Standards der IEEE-802.11-Arbeitsgruppe (z. B. IEEE-802.11b oder IEEE-802.11e), der Bluetooth-Standard, der HomeRF-Standard und der HiperLAN-Standard.

Aufgrund der zunehmenden Beliebtheit derartiger WLANs, insbesondere des IEEE-802.11b Standards, werden an öffentlichen Plätzen sogenannte Hot-Spots installiert. Ein sogenannter Hot-Spot entsteht in der Funk-Reichweite um eine IEEE-802.11 kompatible WLAN-Basisstation, auch WLAN-Access-Point genannt, wobei innerhalb des Hot-Spots eine Funk-Verbindung zwischen einem WLAN-fähigen Mobilgerät, beispielsweise einem Laptop mit einer WLAN-Funknetzkarte, und dem WLAN-Access-Point aufgenommen werden kann. Der WLAN-Access-Point steht zusätzlich, beispielsweise über ein drahtgebundenes Ethernet-Interface, mit dem Festnetz in Verbindung. Über dieses drahtgebundene Interface kann ein Zugriff auf das Internet erfolgen. Der Nutzer eines WLAN-fähigen Mobilgeräts erhält also innerhalb der Funk-Reichweite des WLAN-Access-Points über den WLAN-Access-Point Zugang zum Internet. Die Nutzung dieser Infrastruktur ist dabei teilweise kostenlos oder wird über die Datenmenge, Zugriffdauer oder pauschal (auch als sogenannte "Flat-Rate" bekannt) abgerechnet.

Durch den Zugang zum Internet über einen WLAN-Access-Point ist es möglich, Internet-Telefonie, auch VoIP (Voice over Internet Protokoll) genannt, zu betreiben. Hierbei wird Paketorientiert die Sprachinformation über das Internet ausgetauscht. VoIP stellt an den Übertragungskanal, also sowohl an die Funk-Verbindung zwischen der WLAN-Mobilstation und dem WLAN-Access-Point als auch an die leitungsgebundene Verbindung zwischen dem WLAN-Access-Point und dem Kommunikationspartner, eine Reihe von Anforderungen. Diese Anforderungen bzw. die Erfüllung dieser Anforderungen werden auch als Quality of Service (QoS) bezeichnet. Hierbei wird insbesondere gefordert, dass eine zur Übertragung der Sprachinformationen ausreichende Datenrate gewährleistet werden kann. Ferner ist es notwendig, dass die Verzögerungszeit des Übertragungskanals zeitlich konstant bleibt, so dass das übertragene Signal einen geringen Zeit-Jitter aufweist. Als weitere essentielle Anforderung an den Übertragungskanal muss gewährleistet werden, dass die Verzögerungszeit des Kanals unterhalb einer für die Sprachkommunikation noch akzeptablen Schwelle bleibt. Dabei ist insbesondere zu berücksichtigen, dass die bi-direktionale Verzögerungszeit, im angelsächsischen Sprachgebrauch auch als "round trip delay" (RTD) bezeichnet, zwischen dem Senden einer Information über den Übertragungskanal und dem Empfang einer Information basierend auf der gesendeten Information maximal im Bereich weniger 100 ms sein sollte.

Werden die oben genannten Anforderungen seitens des Übertragungskanals nicht erfüllt, so ist eine VoIP-Applikation mit schweren Qualitätseinschränkungen verbunden. Können die Anforderungen an den Übertragungskanal eingehalten werden, ist es möglich, die Sprachkommunikation über ein zellenbasiertes Mobilfunk-Netz durch VoIP zu ersetzen. Die Sprachkommunikation im Funk-Bereich eines WLAN-Access-Points kann dabei wesentlich kostengünstiger oder gar kostenlos über WLAN anstatt über ein zellenbasiertes Mobilfunk-Netz durchgeführt werden. Dadurch entsteht eine Konkurrenzsituation zwischen IEEE-802.11 basierten WLAN-Funknetzen und dem zellenbasierten Mobilfunk-Netz. Da die Betreiber zellenbasierter Mobilfunk-Netze auch WLAN-Hot-Spots betreiben, entsteht diese Konkurrenzsituation sogar Betreiber-intern. Aufgrund des Kostenvorteils eines VoIP-Gesprächs über eine IEEE-802.11 basierte WLAN-Funk-Verbindung im Vergleich zu einem Gespräch über ein GSM- oder UMTS-Mobilfunk-Gerät besteht die Gefahr, dass sich der Umsatz für den zellbasierten Mobilfunk verringert.

Bei dem noch nicht abschließend spezifizierten Standard IEEE-802.11e sind neuartige Zugriffsverfahren vorgesehen, welche eine verbesserte QoS, insbesondere für VoIP-Applikationen, durch entsprechende Priorisierung des Datenverkehrs ermöglichen. Hierbei könnte vorgesehen werden, die verbesserte QoS nur entsprechend autorisierten Nutzern zur Verfügung zu stellen, um den VoIP-Verkehr zu begrenzen. Da aber bei geringer oder mittlerer Auslastung des WLAN-Access-Points die verbesserte QoS für VoIP-Applikationen nicht zwingend notwendig ist, kann über die selektive Bereitstellung einer verbesserten QoS der VoIP-Verkehr nicht beschränkt oder kontrolliert werden.

Ob der Datenverkehr einer Funkverbindung zwischen einer WLAN-Mobilstation und einem WLAN-Access-Point durch VoIP-basierte Daten oder nicht-sprachbasierte Daten bestimmt ist, kann seitens des WLAN-Access-Points grundsätzlich nicht erkannt werden. Daher ist es seitens des WLAN-Access-Points nicht möglich, die WLAN-Funk-Verbindung für unautorisierte VoIP-basierte Daten zu sperren.

WO 03/043267 A offenbart ein Verfahren zum Bereitstellen von Quality of Service, bei dem die Beschränkung der Datenrate benutzerspezifisch ist.

G. Series: "Transmission Systems and Media, Digital Systems and Networks" offenbart Höchstgrenzen für tolerierbare Verzögerungen bei einer Übertragung von Sprachsignalen.

Es ist daher Aufgabe der Erfindung, ein technisches Verfahren anzugeben, mit dessen Hilfe der synchrone Datenverkehr, insbesondere durch VoIP-basierte Daten, zwischen einer WLAN-Basisstation und einer WLAN-Mobilstation beeinträchtigt oder beschränkt werden kann. Dabei soll das Verfahren den asynchronen Datenverkehr, beispielsweise mit gewöhnlichen Internet-Applikationen wie Surfen im WWW und Email im Zusammenhang stehend, aus Sicht des Nutzers der WLAN-Mobilstation nicht behindern.

Die der Erfindung zugrunde liegende Aufgabenstellung wird durch die Merkmale des Anspruchs 1 gelöst.

Bei dem erfindungsgemäßen Verfahren zur Steuerung des Datenflusses bei einer Funk-Verbindung zwischen einer WLAN-Basisstation und einer WLAN-Mobilstation wird die Datenrate der Funk-Verbindung für jeweils eine Zeitdauer in zeitlichen Abständen reduziert.

Das Verfahren dient der Beschränkung des synchronen Datenverkehrs bei einer Funk-Verbindung. Dem synchronen Datenverkehr können verschiedene synchrone Applikationen oder Dienste zugrunde liegen, beispielsweise rein-sprachbasiertes VoIP oder eine Video-Konferenz.

Ein bevorzugtes Anwendungsfeld des Verfahrens ist die Vermeidung einer generellen oder einer nicht autorisierten Übertragung eines Telefongesprächs über das Internet . Dem erfindungsgemäßen Verfahren liegt dabei die Erkenntnis zugrunde, dass ein synchroner Datenverkehr nur dann gewährleistet werden kann, wenn die Datenrate der WLAN-Funk-Verbindung kontinuierlich auf einem derartigen Wert gehalten wird, der der pro Zeiteinheit synchron generierten Datenmenge entspricht. Kann dies - auch nur kurzfristig - nicht gewährleistet werden, wird die synchrone Übertragung der Daten beeinträchtigt. Wird erfindungsgemäß die Datenrate in zufällig oder fest gewählten zeitlichen Abständen für auch nur eine kurze Zeitdauer reduziert, ergibt sich eine kontinuierliche Beeinträchtigung der synchronen Datenübertragung. Die Qualität einer VoIP-Verbindung wird bei Anwendung des erfindungsgemäßen Verfahrens so drastisch reduziert, dass der Nutzer zum Telefonieren auf die Infrastruktur eines zellenbasierten Mobilfunk-Netzes zurückgreifen muss. Der asynchrone Datenverkehr, beispielsweise mit gewöhnlichen Internet-Applikationen wie dem Surfen im WWW oder Email im Zusammenhang stehend, wird hierdurch jedoch aus Sicht des Nutzers der WLAN-Mobilstation nicht beeinträchtigt, da die durchschnittliche Datenrate der WLAN-Funk-Verbindung bei der Anwendung des erfindungsgemäßen Verfahren im Vergleich zu einer Datenübertragung ohne das erfindungsgemäße Verfahren nur unwesentlich oder überhaupt nicht verringert wird. Im Sinne der Anmeldung kann sowohl die Datenrate uni-direktional als auch bi-direktional reduziert werden. Für eine bi-direktionale VoIP-Verbindung ist es prinzipiell ausreichend, lediglich die Datenrate der von der WLAN-Mobilstation empfangenen oder der an die WLAN-Mobilstation gesendeten Daten zu reduzieren, da in beiden Fällen die RTD erhöht wird.

Im Rahmen der Anmeldung wird unter einer WLAN-Basis- oder WLAN-Mobilstation ein Netzknoten eines beliebigen drahtlosen lokalen Netzwerkes verstanden, insbesondere ein Netzknoten, welcher zu einem Standard (z. B. IEEE-802.11b) der IEEE-802.11-Arbeitsgruppe kompatibel ist. Diese Klasse von Standards wird nachfolgend vereinfacht mit dem Begriff IEEE-802.11-Standard bezeichnet.

Dabei ist es von Vorteil, wenn das Verfahren seitens der WLAN-Basisstation durchgeführt wird. Somit ist es lediglich notwendig, das erfindungsgemäße Verfahren in der WLAN-Basisstation zu implementieren; zur Durchführung des Verfahrens sind also keine aus der Erfindung resultierenden Anforderungen an die WLAN-Mobilstation zu stellen. Das Verfahren ist daher für den Funkverkehr gängiger WLAN-Mobilstationen ohne eine Modifikation der WLAN-Mobilstationen anwendbar.

Wird die Zeitdauer und/oder der zeitliche Abstand zeitlich variiert, sollte vorteilhafterweise die momentane Zeitdauer der Datenraten-Reduktion jeweils kürzer als der momentane zeitliche Abstand sein.

Es ist von Vorteil, wenn das wiederholte Reduzieren der Datenrate derart implementiert wird, dass die Daten der Funk-Verbindung um eine Verzögerungszeit in zeitlichen Abständen verzögert werden. Dabei wirkt die zeitliche Verzögerung quasi wie eine der Dauer der Verzögerungszeit entsprechende Reduktion der momentanen Datenrate auf den Wert null, da während der Dauer der Verzögerung keine Daten übertragen werden. Die Realisierung der dynamischen Reduktion der Datenrate mit Hilfe einer wiederholten Verzögerung ist dabei besonders aufwandsminimal implementierbar, da lediglich der Datenverkehr für die Dauer der Verzögerungszeit unterbrochen werden muss. Es kann insbesondere vorgesehen werden, die Verzögerungszeit zufällig zu wählen, so dass keine Systematik in der Beeinträchtigung für den Nutzer erkennbar wird, auf die sich der Nutzer sonst einstellen könnte.

Es ist von Vorteil, wenn die wiederholte Verzögerung ohne Eingriff in die Funk-spezifischen OSI-Schichten erfolgt. Zu diesem Zweck wird die wiederholte Verzögerung der Daten in der Form bewerkstelligt, dass die Weiterverarbeitung von Festnetz-seitig empfangenen Daten, welche der Funk-Verbindung und damit der WLAN-Mobilstation zugewiesen sind, in zeitlichen Abständen verzögert wird. Dabei richtet sich die Weiterverarbeitung auf die Daten, die in einem in der WLAN-Basisstation befindlichen und der Funk-Verbindung zugewiesenen Zwischenspeicher zwischengespeichert sind. Bei dem Zwischenspeicher handelt es sich vorteilhafterweise um einen FIFO-Speicher (first in - first out). Dieser kann in Software als FIFO-Warteschlange oder in Hardware, beispielsweise als FIFO-Ringspeicher, realisiert werden.

Ein derartiges Verzögern der Daten bietet den Vorteil, dass die Verzögerung ohne Eingriff in die Funk-spezifischen Schichten, wie z. B. die MAC-Schicht (Medium Access Control) oder die physikalische Schicht, ermöglicht wird. Änderungen im Funk-Standard, beispielsweise im IEEE-802.11-Standard, sind daher zur Durchführung des Verfahrens nicht notwendig. Da jeder Funk-Verbindung zwischen der WLAN-Basisstation und einer WLAN-Mobilstation genau ein dedizierter Zwischenspeicher oder Zwischenspeicherbereich zur Verfügung steht, kann der Ablauf des erfindungsgemäßen Verfahrens Nutzer-spezifisch variiert werden, insbesondere kann die Verzögerung der Daten für spezielle Nutzer auch deaktiviert werden. Handelt es sich bei dem Zwischenspeicher um einen FIFO-Speicher, müssen au-βerdem keine zusätzlichen Maßnahmen ergriffen werden, um die Integrität des Datenstroms trotz der Verzögerungen zu gewährleisten, da aufgrund des FIFO-Prinzips (first in - first out) keine Daten verloren gehen oder in ihrer Reihenfolge vertauscht werden. Ein derartiger Zwischenspeicher kann - wie oben bereits erwähnt - Software-basiert oder Hardware-basiert implementiert sein. Die Verzögerung kann beispielsweise dadurch bewirkt werden, dass ein schaltbares Verzögerungsglied hinter dem Zwischenspeicher in zeitlichen Abständen aktiviert wird.

Zur Verzögerung der Weiterverarbeitung dieser Daten kann vorteilhafterweise vorgesehen sein, die Datenausgabe der Festnetz-seitig empfangenen Daten aus dem Zwischenspeicher, insbesondere FIFO-Speicher, entsprechend der Verzögerungszeit zeitweise zu unterbinden.

Eine Verzögerung durch zeitweises Unterbinden der Datenausgabe aus dem Zwischenspeicher ist sehr einfach ohne zusätzliche Verzögerungselemente zu realisieren. Ein Unterbinden der Datenausgabe kann insbesondere dadurch erreicht werden, dass ein die Datenausgabe des Zwischenspeichers steuerndes Signal während des Unterbindens so gesetzt wird, dass keine neuen Daten aus dem Zwischenspeicher ausgelesen werden können. Nachdem das Steuer-Signal nach der Verzögerungszeit den Ausleseprozess wieder aktiviert hat, werden diejenigen Daten aus dem Zwischenspeicher ausgelesen, welche bereits zum Zeitpunkt des Unterbindens der Datenausgabe zur Datenausgabe anstanden.

Es ist von Vorteil, wenn die Zeitdauer bzw. die Verzögerungszeit im Bereich von 100 ms bis 5 s liegt, insbesondere im Bereich von 100 ms bis 1 s. Durch diese Wahl der Zeitdauer bzw. der Verzögerungszeit wird der asynchrone Datenverkehr aus Sicht des Nutzers der WLAN-Mobilstation nicht behindert. Der synchrone Datenverkehr wird jedoch so stark beeinträchtigt, dass VoIP aufgrund der damit einhergehend erhöhten RTD nicht mehr sinnvoll durchführbar ist. Der zeitliche Abstand sollte vorteilhafterweise im Bereich von 500 ms bis 15 s liegen, insbesondere im Bereich von 1 s bis 10 s.

Nach einer vorteilhaften Ausführungsform des erfindungsgemäßen Verfahrens wird zunächst ein Benutzer-Status der WLAN-Mobilstation abgefragt. Die Datenrate der Funk-Verbindung wird lediglich dann reduziert, wenn der Benutzer-Status zur Nutzung eines synchronen Datendienstes, beispielsweise VoIP, nicht berechtigt. Berechtigt der Benutzer-Status zur Nutzung des synchronen Datendienstes wird die erfindungsgemäße wiederholte Reduktion der Datenrate deaktiviert.

Durch die selektive Aktivierung oder Deaktivierung der erfindungsgemäßen Datenraten-Reduktion in Abhängigkeit von dem Benutzer-Status ist es möglich, die notwendige QoS für die Nutzung eines synchronen Dienstes, beispielsweise VoIP, ausschließlich autorisierten Nutzern einer WLAN-Mobilstation zur Verfügung zu stellen. Die Autorisierung kann dabei an die Zahlung einer bestimmten Gebühr gekoppelt sein. Die Nutzer, die aufgrund des Benutzer-Status nicht zur Nutzung berechtigt sind, werden von der Nutzung des synchronen Dienstes durch die erfindungsgemäße Reduktion der Datenrate praktisch ausgeschlossen.

Die erfindungsgemäße Vorrichtung gemäß Anspruch 12 ist zur Steuerung des Datenflusses bei einer Funk-Verbindung zwischen einer WLAN-Basisstation und einer WLAN-Mobilstation ausgelegt. Die Vorrichtung umfasst Mittel zum Reduzieren der Datenrate in zeitlichen Abständen.

Die erfindungsgemäße WLAN-Station gemäß Anspruch 14 umfasst die erfindungsgemäße Vorrichtung. Dabei kann es sich bei der WLAN-Station um eine WLAN-Basisstation oder eine WLAN-Mobilstation handeln. Vorzugsweise wird die erfindungsgemäße Vorrichtung in die WLAN-Basisstation integriert.

Weitere vorteilhafte Ausgestaltungen der Erfindung sind in den Unteransprüchen angegeben.

Die Erfindung wird nachfolgend anhand eines Ausführungsbeispiels unter Bezugnahme auf die Figuren näher erläutert; in diesen zeigen:
- Fig. 1: ein Blockdiagramm zur Implementierung des erfindungsgemäßen Verfahrens in Bezug auf einen nach dem IEEE-802.11-Standard arbeitenden WLAN-Access-Point; und
- Fig. 2: zwei Zeitverläufe einer Funk-Verbindung mit und ohne kurzzeitige Verzögerung der Übertragung.

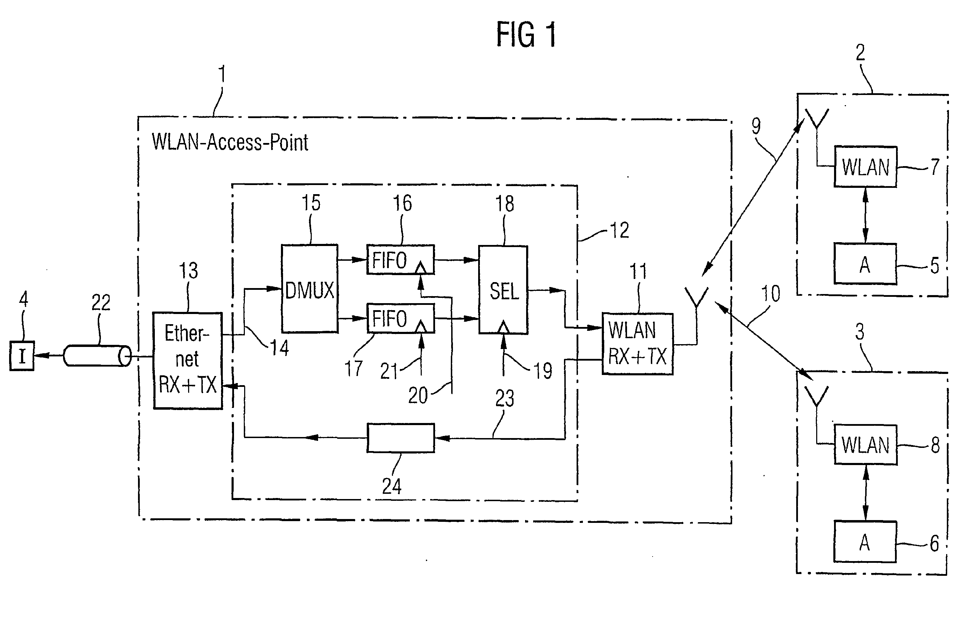

Fig. 1 zeigt die Implementierung des erfindungsgemäßen Verfahrens in Bezug auf einen nach dem IEEE-802.11-Standard arbeitenden WLAN-Access-Point 1. Der WLAN-Access-Point 1 stellt für in der Funk-Reichweite befindliche WLAN-Mobilstationen 2 und 3 einen Zugang zum Internet 4 dar. Dabei bildet der WLAN-Access-Point 1 zusammen mit den WLAN-Mobilstationen 2 und 3 ein Funk-Netz. Eine WLAN-Mobilstation 2 oder 3 kann dabei beispielsweise aus einem Laptop, PDA (Personal Data Assistant) oder gar aus einem klassischen GSM- oder UMTS-Mobiltelefon mit einer IEEE-802.11-kompatiblen Funkschnittstelle bestehen. Dabei werden in den WLAN-Mobilstationen 2 und 3 die Applikationen 5 bzw. 6 durchgeführt, wobei für beide Applikationen 5 und 6 ein Datenaustausch mit dem Internet 4 benötigt wird. Eine derartige Applikation 5 oder 6 kann beispielsweise in VoIP oder dem Surfen im WWW bestehen. Der Datenaustausch der Applikationen 5 und 6 findet dabei über die in den jeweiligen WLAN-Mobilstationen 2 bzw. 3 befindlichen WLAN-Transceiver 7 bzw. 8 statt, welche jeweils mit dem WLAN-Access-Point 1, insbesondere mit einem in dem WLAN-Access-Point 1 befindlichen WLAN-Transceiver 11, über eine Funk-Verbindung 9 bzw. 10 verbunden sind. Die den FunkVerbindungen 9 und 10 zugeordneten Daten werden nach Empfangs- oder Senderichtung getrennt über ein nachfolgend noch genauer zu beschreibendes WLAN/Ethernet-Interface 12 einem Ethernet-Transceiver 13 zugeführt bzw. seitens des Ethernet-Transceivers 13 an den WLAN-Transceiver 11 ausgegeben.

Der Ethernet-Transceiver 13 arbeitet beispielsweise nach dem 10BaseT- (10 Mbit/s), dem 100BaseT- (100 Mbit/s, auch als Fast-Ethernet bezeichnet) oder dem 1000Base-Standard (1 Gbit/s, auch als Gigabit-Ethernet bezeichnet). Der Ethernet-Transceiver 13 hat über ein Übertragungsmedium 22 (z. B. Glasfaser- oder Koaxial-Leitungen) Zugang zum Internet 4. Seitens des WLAN-Access-Points 1 über den Ethernet-Transceiver 13 empfangene Datenpakete 14 werden über einen Demultiplexer 15 parallelen FIFO-Speichern 16 und 17 zur Zwischenspeicherung zugewiesen. Der Demultiplexer 15 führt diese Zuweisung in Abhängigkeit der Ziel-Addresse, also der Adresse der WLAN-Mobilstation 2 bzw. der Adresse der WLAN-Mobilstation 3, des jeweiligen Datenpakets 14 durch. Jeder FIFO-Speicher 16 und 17 ist dabei einer der WLAN-Mobilstationen 2 oder 3 zugeordnet. Im vorliegenden Fall wird angenommen, dass der FIFO-Speicher 16 der Mobilstation 2 und der FIFO-Speicher 17 der Mobilstation 3 zugeordnet sind. Die in den FIFO-Speichern 16 und 17 befindlichen Daten werden über einen Selektor 18, auch als Arbiter bezeichnet, ausgelesen und anschließend seitens des WLAN-Transceivers 11 an die WLAN-Mobilstation 2 bzw. 3 gesendet. Das Steuer-Signal 19 des Selektors 18 wird durch das zugrunde liegende Zugriffsverfahren (z. B. distributed coordination function - DCF, point coordination function - PCF) als Teil der MAC-Schicht bestimmt. Die Datenausgabe der FIFO-Speicher 16 und 17 wird durch die Steuer-Signale 20 bzw. 21 gesteuert. Seitens des WLAN-Access-Points 1 über den WLAN-Transceiver 11 empfangene Datenpakete 23 werden über ein im Rahmen der Anmeldung nicht näher spezifiziertes Netzwerk 24 in den Ethernet-Transceiver 13 eingelesen. Das WLAN/Ethernet-Interface 12 kann in Hardware, in Software oder in gemischter Form ausgelegt sein. Die Steuer-Signale 20 und 21 können also auch Software-interne Größen sein.

Nachfolgend wird zunächst angenommen, dass die Applikation 5 der WLAN-Mobilstation 2 keinen synchronen Datenverkehr bewirkt (z. B. Surfen im WWW). Im Gegensatz dazu stellt die Applikation 6 der WLAN-Mobilstation 3 Internet-Telefonie dar, wobei fortwährend synchrone Daten zwischen der WLAN-Mobilstation 3 und dem entsprechenden Gesprächspartner bi-direktional ausgetauscht werden müssen. Bei der Einrichtung der Funkverbindung 9 oder 10 wird seitens des WLAN-Access-Points 1 der Benutzer-Status der WLAN-Mobilstationen 2 bzw. 3 abgefragt. Diese Informationen können beispielsweise aus einer Datenbank des Service-Providers über das Internet abgefragt werden. Die Datenrate der Funk-Verbindung 9 oder 10 wird lediglich dann in zeitlichen Abständen kurzfristig reduziert, wenn der Benutzer-Status zur Nutzung eines synchronen Datendienstes, beispielsweise Internet-Telefonie, nicht berechtigt. Ist dies der Fall, werden die Daten der Funk-Verbindung 9 bzw. 10 um eine Verzögerungszeit, beispielsweise 200 ms, in zeitlichen Abständen, beispielsweise 1 s, verzögert. Gemäß dem Ausführungsbeispiel betrifft die Verzögerung die Weiterverarbeitung der über den Ethernet-Transceiver 13 empfangenen Daten, welche in den FIFO-Speichern 16 und 17 abgelegt sind.

Die Verzögerung wird gemäß Fig. 1 so realisiert, dass die Datenausgabe des FIFO-Speichers 16 bzw. 17 in zeitlichen Abständen kurzfristig unterbunden wird. Ein Vorteil dieser Vorgehensweise ist, dass nicht in die MAC-Schicht oder die physikalische Schicht des WLAN-Interfaces eingegriffen werden muss. Im Detail wird die Verzögerung dadurch bewirkt, dass das jeweilige Steuer-Signal 20 bzw. 21 während der Verzögerungszeit so gesetzt ist, dass während der Verzögerungszeit keine Daten seitens des Selektors 18 aus dem jeweiligen FIFO-Speicher 16 bzw. 17 ausgelesen werden können, obwohl der Selektor 18 gemäß dem Zugriffsverfahren (als Teil der MAC-Schicht) zum Auslesen der Daten aus dem jeweiligen Zwischenspeicher 16 bzw. 17 bereit ist. Nach Verstreichen der Verzögerungszeit wird das jeweilige Steuer-Signal 20 bzw. 21 so gesetzt, dass die Daten seitens des Selektors 18 aus dem jeweiligen FIFO-Speicher 16 bzw. 17 ausgelesen werden können. Die Daten, welche eigentlich zum Beginn der Verzögerung seitens des Selektors 18 hätten ausgelesen werden sollen, werden damit nun um die Verzögerungszeit verspätet ausgelesen. Dies bewirkt, dass die Daten auch verspätet in der jeweiligen Mobilstation 2 bzw. 3 empfangen werden. Die Applikation 5 wird durch die in zeitlichen Abständen auftretende kurzzeitige Verzögerung nicht beeinträchtigt, da die durchschnittliche Datenrate der WLAN-Funk-Verbindung 9 bei der Anwendung des erfindungsgemäßen Verfahren im Vergleich zu einer Datenübertragung ohne das erfindungsgemäße Verfahren nur unwesentlich oder überhaupt nicht verringert wird. Die mitunter auftretende Erhöhung der RTD (z. B. um 200 ms in Zeitabständen von 1 s) ist für den Nutzer der WLAN-Mobilstation 2 nicht spürbar. Dagegen wird die Qualität der VoIP-Verbindung in Form der Applikation 6 durch die Erhöhung der RTD für den Nutzer der WLAN-Mobilstation 3 drastisch reduziert. Der Nutzer der WLAN-Mobilstation 3 muss für die mobile Sprachkommunikation auf sein GSM- oder UMTS-Mobiltelefon zurückgreifen.

Nun wird für einen anderen Betriebsfall des WLAN-Access-Points 1 angenommen, dass sowohl die Applikation 5 der WLAN-Mobilstation 2 als auch Applikation 6 der WLAN-Mobilstation 3 Internet-Telefonie darstellen. Bei der Einrichtung der Funk-verbindung 9 oder 10 wird seitens des WLAN-Access-Points 1 der Benutzer-Status der WLAN-Mobilstationen 2 und 3 abgefragt. Dabei ergibt sich, dass lediglich der Nutzer (Premium-Nutzer) der WLAN-Mobilstation 2 zur Internet-Telefonie berechtigt ist, wohingegen der Nutzer (Standard-Nutzer) der WLAN-Mobilstation 3 diese Berechtigung nicht besitzt. Seitens des Ethernet-Transceivers 13 empfangene Datenpakete, welche für die Mobilstation 2 bestimmt sind, werden über den Demultiplexer 15 in den FIFO-Speicher 16 eingelesen, wohingegen die Datenpakete, welche für die Mobilstation 3 bestimmt sind, in den FIFO-Speicher 17 eingelesen werden. Die vorstehend beschriebene verzögerte Datenausgabe und Weiterleitung wird in diesem Fall lediglich für den FIFO-Speicher 17 durchgeführt. Hierzu ist das Steuer-Signal 21 - wie bereits beschreiben - so zu setzen, dass während der Verzögerungszeit keine Daten seitens des Selektors 18 aus dem FIFO-Speicher 17 ausgelesen werden können. Hinsichtlich des FIFO-Speichers 16 ist keine verzögerte Datenausgabe vorgesehen. Somit wird lediglich für die Mobilstation 3 die RTD erhöht, wohingegen für die Mobilstation 2 die RTD nicht erhöht wird. Daher wird die Qualität der VoIP-Verbindung in Form der Applikation 6 durch die Erhöhung der RTD drastisch reduziert, wohingegen die VoIP-Verbindung in Form der Applikation 5 keine Einschränkung erfährt.

Es ist im Sinne der Anmeldung denkbar, alternativ oder auch zusätzlich die von den Mobilstationen 2 und 3 gesendeten Daten in analoger Weise zu den empfangenen Daten zu verzögern. In diesem Fall ist das Netzwerk 24 in analoger Weise zu der vorstehend beschriebenen technischen Lehre auszulegen.

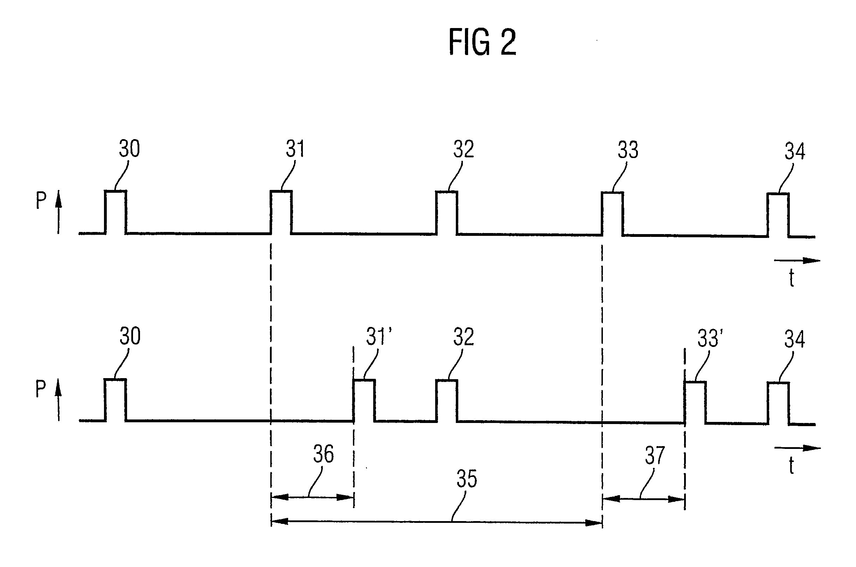

In Fig. 2 sind zwei Leistungs-Zeitverläufe der Funk-Verbindung 9 oder 10 gemäß Fig. 1 dargestellt, wobei sich die Zeitverläufe auf die seitens einer WLAN-Mobilstation 2 bzw. 3 empfangenen Daten beziehen. Die Darstellung der Zeitverläufe dient nur dem prinzipiellen Verständnis der Erfindung und ist nicht maßstabsgetreu der wirklichen Verhältnisse ausgeführt. Die zeitliche Verzögerung kann dabei um mehrere Größenordnungen größer als die Länge eines Zeitschlitzes (20 µs beim 802.11b-Standard mit 11 Mbit/s Übertragungsdatenrate) und die maximale Länge eines MAC-Frames (maximal 4095 Bytes beim 802.11b-Standard mit 11 Mbit/s Übertragungsdatenrate) sein. Der obere Zeitverlauf beschreibt eine Funk-Verbindung 9 oder 10, bei welcher die erfindungsgemäße Verzögerung der Daten der Funk-Verbindung 9 oder 10 um eine Verzögerungszeit in zeitlichen Abständen nicht durchgeführt wird. Einzelne Datenbursts 30 bis 34 werden jeweils verzögerungsfrei übertragen. Dagegen zeigt der untere Zeitverlauf eine Funk-Verbindung 9 oder 10, bei welcher in zeitlichen Abständen 35, einzelne Datenbursts 31' und 33' um eine Verzögerungszeit 36 bzw. 37 verzögert werden. Dabei entsprechen mit gleichen Bezugszeichen versehene Datenbursts aus dem oberen und dem unteren Zeitverlauf einander. Der Datenburst 31' aus dem unteren Zeitverlauf ist dabei um die Verzögerungszeit 36 gegenüber dem Datenburst 31 aus dem oberen Zeitverlauf verzögert. In analoger Weise ist der Datenburst 33' aus dem unteren Zeitverlauf um die Verzögerungszeit 37 gegenüber dem Datenburst 33 aus dem oberen Zeitverlauf verzögert. Während der Verzögerungszeiten 36 und 37 sinkt die Datenrate kurzfristig auf null. Die Verzögerungszeiten 36 und 37 können einander entsprechen. Erfindungsgemäß wird eine kurzzeitige Verzögerung der Daten in zeitlichen Abständen 35 vorgenommen, so dass nicht alle Datenbursts, sondern nur die Datenbursts 31' und 33' zeitlich verzögert werden.

## Patentansprüche

1. Verfahren zur Steuerung des Datenflusses bei einer Funk-Verbindung (9, 10) zwischen einer WLAN-Basisstation (1) und einer WLAN-Mobilstation (2, 3), wobei die Funkverbindung einen synchronen Datenverkehr und einen asynchronen Datenverkehr aufweist, mit dem Schritt:
a) Reduzieren der Datenrate des synchronen Datenverkehrs für jeweils eine Zeitdauer (36, 37) in zeitlichen Abständen (35), um den synchronen Datenverkehr zu beschränken.

2. Verfahren nach Anspruch 1,
**dadurch gekennzeichnet,**
**dass** das Verfahren seitens der WLAN-Basisstation (1) durchgeführt wird.

3. Verfahren nach Anspruch 1 oder 2,
**dadurch gekennzeichnet,**
**dass** die momentane Zeitdauer (36, 37) der Datenraten-Reduktion jeweils kürzer als der momentane zeitliche Abstand (35) ist.

4. Verfahren nach einem der vorherigen Ansprüche,
**dadurch gekennzeichnet,**
**dass** der Verfahrensschritt a) den folgenden Schritt umfasst:
a') Verzögern der Daten der Funk-Verbindung (8, 9) um eine Verzögerungszeit (36, 37), insbesondere eine zufällig gewählte Verzögerungszeit, in zeitlichen Abständen (35).

5. Verfahren nach Anspruch 4,
**dadurch gekennzeichnet,**
**dass** der Verfahrensschritt a') den folgenden Schritt umfasst:
a") Verzögern der Weiterverarbeitung Festnetz-seitig empfangener, der Funk-Verbindung zugewiesener Daten, welche in einem in der WLAN-Basisstation (1) befindlichen, der Funk-Verbindung (9, 10) zugewiesenen Zwischenspeicher (16, 17), insbesondere FIFO-Speicher, zwischengespeichert sind.

6. Verfahren nach Anspruch 5,
**dadurch gekennzeichnet,**
**dass** der Verfahrensschritt a") den folgenden Schritt umfasst:
- zeitweises Unterbinden der Datenausgabe der Festnetz-seitig empfangenen Daten aus dem Zwischenspeicher (16, 17), insbesondere FIFO-Speicher, entsprechend der Verzögerungszeit (36, 37).

7. Verfahren nach einem der vorhergehenden Ansprüche,
**dadurch gekennzeichnet,**
**dass** die Zeitdauer bzw. die Verzögerungszeit (36, 37) im Bereich von 100 ms bis 5 s liegt, insbesondere im Bereich von 100 ms bis 1 s.

8. Verfahren nach Anspruch 7,
**dadurch gekennzeichnet,**
**dass** der zeitliche Abstand (35) im Bereich von 500 ms bis 15 s liegt, insbesondere im Bereich von 1 s bis 10 s.

9. Verfahren nach einem der vorhergehenden Ansprüche,
**dadurch gekennzeichnet,**
**dass** die Zeitdauer bzw. die Verzögerungszeit und/oder der zeitliche Abstand zeitlich variieren.

10. Verfahren nach einem der vorhergehenden Ansprüche, **gekennzeichnet durch**
den Verfahrensschritt:
b) Abfragen eines Benutzer-Status der WLAN-Mobilstation (2, 3),
wobei die Durchführung des Verfahrensschritts a) vom Abfrageergebnis aus Verfahrensschritt b) abhängt.

11. Verfahren nach einem der vorhergehenden Ansprüche,
**dadurch gekennzeichnet**,
wobei der synchrone Datenverkehr ein Voice over IP Verkehr ist (VoIP) .

12. Vorrichtung zur Steuerung des Datenflusses bei einer Funk-Verbindung (9, 10) zwischen einer WLAN-Basisstation (1) und einer WLAN-Mobilstation (2, 3), wobei die Funkverbindung einen synchronen Datenverkehr und einen asynchronen Datenverkehr aufweist, und wobei die Vorrichtung zur Steuerung des Datenflusses Mittel (16-21; 24) zum Reduzieren der Datenrate des synchronen Datenverkehrs für jeweils eine Zeitdauer in zeitlichen Abständen aufweist, um den synchronen Datenverkehr zu beschränken.

13. Vorrichtung nach Anspruch 12,
**dadurch gekennzeichnet,**
**dass** die Mittel (16-21; 24) zum Reduzieren der Datenrate einen Zwischenspeicher, insbesondere einen FIFO-Speicher (16, 17), zum Zwischenspeichern von empfangenen oder zu sendenden Daten und ein dem Zwischenspeicher zugeordnetes Steuer-Signal (20, 21) zum zeitweisen Unterbinden der Datenausgaben aus dem Zwischenspeicher (16, 17) aufweist.

14. WLAN-Station (1), insbesondere WLAN-Basisstation, mit einer Vorrichtung nach Anspruch 12 oder 13.

## Claims

1. Method for controlling the data flow in a radio link (9, 10) between a WLAN base station (1) and a WLAN mobile station (2, 3) with the radio link having synchronous data traffic and asynchronous data traffic, having the following step:
a) reduction in the data rate of the synchronous data traffic for in each case one time period (36, 37) at time intervals (35), in order to restrict the synchronous data traffic.

2. Method according to Claim 1
**characterized**
**in that** the method is carried out at the WLAN base station (1) .

3. Method according to Claim 1 or 2,
**characterized**
**in that** the time period (36, 37) of the data rate reduction at any given time is in each case shorter than the time interval (35) at that time.

4. Method according to one of the preceding claims,
**characterized**
**in that** the method step a) comprises the following step:
a') delay of the data on the radio link (8, 9)' by a delay time (36, 37), in particular a randomly selected delay time, at time intervals (35).

5. Method according to Claim 4,
**characterized**
**in that** the method step a') comprises the following step:
a'') delay of the further-processing of data which is received at the landline network end, is assigned to the radio link and is temporarily stored in a buffer store (16, 17), in particular a FIFO memory, which is located in the WLAN base station (1) and is assigned to the radio link (9, 10).

6. Method according to Claim 5,
**characterized**
**in that** the method step a'') comprises the following step:
- suppression of the data output of the data which has been received at the landline end from the buffer store (16, 17), in particular the FIFO memory, at times, corresponding to the delay time (36, 37).

7. Method according to one of the preceding claims,
**characterized**
**in that** the time period or the delay time (36, 37) is in the range from 100 ms to 5 s, in particular in the range from 100 ms to 1 s.

8. Method according to Claim 7,
**characterized**
**in that** the time interval (35) is in the range from 500 ms to 15 s, in particular in the range from 1 s to 10 s.

9. Method according to one of the preceding claims,
**characterized**
**in that** the time period or the delay time and/or the time interval vary in time.

10. Method according to one of the preceding claims,
**characterized by**
the following method step:
b) checking of a user status of the WLAN mobile station (2, 3)
with the result of the check from method step b) governing whether the method step a) is carried out.

11. Method according to one of the preceding claims,
**characterized**
**in that** the synchronous data traffic is voice over IP (VoIP) traffic.

12. Apparatus for controlling the data flow on a radio link (9, 10) between a WLAN base station (1) and a WLAN mobile station (2, 3), with the radio link having synchronous data traffic and asynchronous data traffic, and with the apparatus for controlling the data flow having means (16-21; 24) for reducing the data rate of the synchronous data traffic for in each case one time period at time intervals, in order to restrict the synchronous data traffic.

13. Apparatus according to Claim 12, **characterized**
**in that** the means (16-21; 24) for reducing the data rate has a buffer store, in particular a FIFO memory (16, 17), for temporary storage of received data or of data to be transmitted, and has a control signal (20, 21), which is associated with the buffer store, for suppression of the data outputs from the buffer store (16, 17) at times.

14. WLAN station (1), in particular a WLAN base station, having an apparatus according to Claim 12 or 13.

## Revendications

1. Procédé de commande du flux de données dans une liaison radioélectrique (9, 10) entre une station de base WLAN (1) et une station mobile WLAN (2, 3), la liaison radioélectrique comportant un trafic de données synchrones et un trafic de données asynchrones, ledit procédé comportant l'étape consistant à :
a) réduire le débit de données du trafic de données synchrones pendant une durée (36, 37) et à des intervalles de temps (35) afin de limiter le trafic de données synchrones.

2. Procédé selon la revendication 1, **caractérisé en ce que** le procédé est mis en oeuvre du côté de la station de base WLAN (1).

3. Procédé selon la revendication 1 ou 2, **caractérisé en ce que** la durée instantanée (36, 37) de la réduction du débit de données est respectivement inférieure à l'intervalle de temps instantané (35).

4. Procédé selon l'une des revendications précédentes, **caractérisé en ce que** l'étape de procédé a) comporte l'étape suivante consistant à :
a') retarder les données de la liaison radioélectrique (8, 9) d'un retard (36, 37), notamment d'un retard choisi aléatoirement, à des intervalles de temps (35).

5. Procédé selon la revendication 4, **caractérisé en ce que** l'étape de procédé a') comporte l'étape suivante consistant à :
a") retarder le traitement ultérieur de données qui sont reçues du côté du réseau fixe et affectées à la liaison radioélectrique (9, 10.) et qui sont mémorisées provisoirement dans une mémoire intermédiaire (16, 17), notamment une mémoire FIFO, qui se trouve dans la station de base WLAN (1) et qui est affectée à la liaison radioélectrique (9, 10).

6. Procédé selon la revendication 5, **caractérisé en ce que** l'étape de procédé a'') comporte l'étape suivante consistant à :
- interdire provisoirement la sortie des données, reçu du côté du réseau fixe, de la mémoire intermédiaire (16,17), notamment la mémoire FIFO, en correspondance avec le retard (36, 37).

7. Procédé selon l'une des revendications précédentes, **caractérisé en ce que** la durée resp. le retard (36, 37) est de l'ordre de 100 ms à 5 s, notamment de l'ordre de 100 ms à 1 s.

8. Procédé selon la revendication 7, **caractérisé en ce que** l'intervalle de temps (35) est de l'ordre de 500 ms à 15 s, notamment de l'ordre de 1 s à 10 s.

9. Procédé selon la revendication précédente, **caractérisé en ce que** la durée respectivement le retard et/ou l'intervalle de temps varie dans le temps.

10. Procédé selon l'une des revendications précédentes, **caractérisé par** l'étape de procédé consistant à :
b) demander un état de l'utilisateur de la station mobile WLAN (2, 3),
la réalisation de l'étape de procédé a) dépendant du résultat de la demande à l'étape de procédé b).

11. Procédé selon l'une des revendications précédentes, **caractérisé en ce que** le trafic de données synchrones est un trafic Voice over IP (VoIP).

12. Dispositif de commande du flux de données dans une liaison radioélectrique (9, 10) entre une station de base WLAN (1) et une station mobile WLAN (2, 3), la liaison radioélectrique comportant un trafic de données synchrones et un trafic de données asynchrones, et le dispositif de commande du flux de données comportant des moyens (16 à 21 ; 24) permettant de réduire le débit de données du trafic de données synchrones pendant une durée et à des intervalles de temps afin de limiter le trafic de données synchrones.

13. Dispositif selon la revendication 12, **caractérisé en ce que** les moyens (16 à 21 ; 24) permettant de réduire le débit de données comporte une mémoire intermédiaire, notamment une mémoire FIFO (16, 17), permettant de mémoriser temporairement des données reçues ou à émettre et un signal de commande, associé à la mémoire intermédiaire (20, 21), permettant d'interdire temporairement la sortie de données de la mémoire intermédiaire (16, 17).

14. Station WLAN (1), notamment station de base WLAN, comportant un dispositif selon la revendication 12 ou 13.
